# EUROPÄISCHE PATENTSCHRIFT

(11) **EP 0 843 396 B1**
(45) Veröffentlichungstag und Bekanntmachung des Hinweises auf die Patenterteilung: **07.05.2003**
(21) Anmeldenummer: 97118924.6
(22) Anmeldetag: 30.10.1997
(51) Int. Cl.: H02J 7/00

(54) **Vorrichtung zur Stromversorgung eines elektronischen Gerätes**
Apparatus for supplying power to an electronic device
Appareil pour l'alimentation d'un dispositif électronique

(30) Priorität: 18.11.1996 DE 19647592
(43) Veröffentlichungstag der Anmeldung: 20.05.1998
(73) Patentinhaber: VARTA Microbattery GmbH, 30419 Hannover (DE)
(72) Erfinder: Knop, Ingmar, 73433 Aalen (DE)
(74) Vertreter: Patentanwälte Ruff, Wilhelm, Beier, Dauster & Partner

(56) Entgegenhaltungen:
- US-A- 4 303 877
- US-A- 5 372 605
- SCHINDLER M: "PROPER HANDLING HELPS MAKE THE MOST OF LI-ION BATTERIES" EDN ELECTRICAL DESIGN NEWS, Bd. 41, Nr. 25, 5. Dezember 1996 (1996-12-05), Seiten 179-182, 184, 18, XP000659262 ISSN: 0012-7515

## Beschreibung

Die Erfindung betrifft eine Vorrichtung zur Stromversorgung eines elektronischen Gerätes, insbesondere eines tragbaren Telefons, eines tragbaren Computers, eines Camcorders oder dergleichen.

Tragbare Geräte, beispielsweise tragbare Telefone, sind im allgemeinen mit einem Batteriegehäuse versehen, welches einen Akkumulator zur Stromversorgung enthält, der mit einer Schutzschaltung mit Spannungsüberwachung und gegebenenfalls Strom- und Temperaturüberwachung versehen ist. Derartige Batteriepacks enthalten in steigendem Umfang Li-lonen-Zellen, die eine hohe Energiedichte und damit ein geringes Gewicht besitzen. Den Li-Ionen-Zellen ist eine Schutzschaltung zugeordnet, die sie vor Überspannung, Überladung, Tiefentladung und dem Betrieb bei extremen Temperaturen absichern soll. Derartige Li-lonen-Akkus haben eine sehr kleine Selbstentladung. Durch diese Selbstentladung und durch den Stromverbrauch der Schutzschaltung bzw. Sicherheitselektronik kann durch lange Lagerzeiten der Li-lonen-Akkumulator einen bestimmten Spannungswert beispielsweise ca. 2 Volt unterschreiten. Wenn dieser akkumulatorspezifische Spannungswert unterschritten wird, treten irreversible Kapazitätsverluste auf, d.h. der Akkumulator läßt sich auch durch einen Aufladevorgang nicht wieder auf seine ursprüngliche Kapazität aufladen.

Der Erfindung liegt die Aufgabe zugrunde, eine Vorrichtung anzugeben, bei der der irreversible Verlust durch fortgesetzte Selbstentladung eines Li-lonen-Akkus weitestgehend vermieden wird.

Diese Aufgabe wird erfindungsgemäß durch die Merkmale des Anspruchs 1 gelöst. Weitere vorteilhafte Ausgestaltungen der erfindungsgemäßen Vorrichtung sind den Unteransprüchen zu entnehmen.

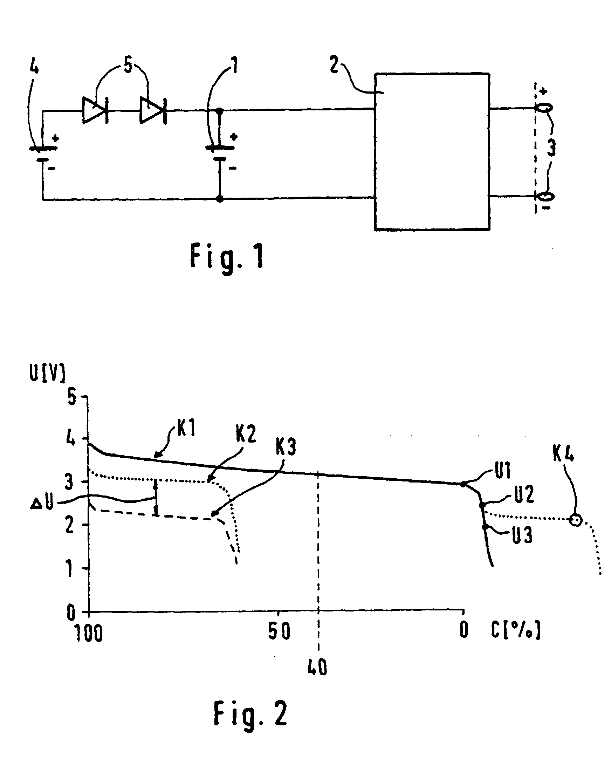

Erfindungsgemäß wird dem Li-Ionen-Akku ein Primärelement als Pufferbatterie über eine oder mehrere Koppeldioden parallelgeschaltet. Über dieses Primärelement wird nach Erreichen einer vorgegebenen unteren Spannung des Li-Ionen-Akkus, die Selbstentladung des Li-Ionen-Akkus kompensiert. Die dem Li-Ionen-Akku zugeordnete Schutzschaltung ist im allgemeinen so ausgelegt, daß sie den Entladepfad bei Erreichen einer gewissen unteren Grenzspannung des Li-lonen-Akkumulators abschaltet. Danach findet jedoch nach wie vor eine Selbstentladung der Li-Ionen-Zelle statt, die erfindungsgemäß durch das parallel angekoppelte Primärelement ausgeglichen wird. Als Primärelement eignen sich insbesondere LiMnO₂-Zellen. Im folgenden ist der Gegenstand der Erfindung anhand der Figuren 1 und 2 näher erläutert. Wie in Figur 1 ersichtlich, ist der Li-Ionen-Akkumulator 1 mit einer elektronischen Schutzschaltung 2 versehen, über deren Klemmen 3 der Stromverbraucher, insbesondere das tragbare Telefon, angeschlossen ist.

Parallel zum Li-Ionen-Akkumulator ist eine Primärzelle 4, insbesondere eine LiMnO₂-Primärzelle, geschaltet und über mindestens eine Diode 5 angekoppelt. Die Wirkungsweise einer solchen Schaltung ergibt sich aus Figur 2. In Figur 2 ist mit K1 die Kennlinie des Li-lonen-Akkumulators bezeichnet. Beim Erreichen der Spannung U1 wird das verbrauchende Gerät abgeschaltet, beim Erreichen der Spannung U2 schaltet die Schutzelektronik 2 den Entladepfad aus und geht in einen Standby-Modus, beim Unterschreiten der Spannung U3 treten irreversible Kapazitätsverluste des Li-Ionen-Akkumulators auf.

In Figur 2 ist die Entladekurve des parallel geschalteten Primärelements, in diesem Fall der LiMnO₂-Zelle, mit K2 bezeichnet Gezeigt ist die Spannung U in Abhängigkeit von der Kapazität C [%]. Unterhalb dieser Entladekurve 2 ist Kurve K3 dargestellt, welche um die Differenz Δ U verschoben ist, wobei Δ U dem Spannungsabfall an den beiden Dioden 5 entspricht. Die Spannung des Primärelements 4 und der Dioden 5 ist so bemessen, daß die Summe der Zellenspannung des Primärelements und der Durchlaßspannung der Dioden der vorgegebenen unteren Spannung U2 entspricht, bei der die Schutzelektronik den Entladepfad abschaltet und in den Standby-Modus geht. Es ergibt sich somit eine, durch die Kurve K4 dargestellte, verlängerte Lagerzeit durch die Kompensation der Selbstentladung des Li-Ionen-Akkus mit Hilfe des Primärelements 4.

Bei Verwendung von mehreren Li-lonen-Akkumulatoren in Reihe müssen selbstverständlich entsprechend viele Primärelemente ebenfalls in Reihenschaltung verwendet werden und über eine entsprechende Anzahl von Dioden oder Zener-Dioden angekoppelt werden, um das spannungsrichtige Zuschalten der Primärelemente zu gewährleisten.

Die näherungsweise Berechnung der Lagerzeit eines Gerätes mit einem Batteriepack mit oder ohne zusätzliches Primärelement ergibt sich aus folgenden Zusammenhängen.

Der Li-lonen-Akkumulator hat zum Beispiel bei Auslieferung ca. 40% Nennkapazität. Bei einer Nennkapazität von 1 Ah wären daher mit Auslieferung ca. 400 mAh verfügbar. Der Strom der Sicherheitselektronik bzw. Schutzschaltung bis zur Batteriespannung von 2,5 V liegt beispielsweise bei ca. 15 µA, der Selbstentladestrom bei Raumtemperatur im Kapazitätsbereich von 400 mAh bis 0 mAh liegt bei ca. 20 µA. Wird der Li-Ionen-Akkumulator mit der Summe dieser beiden Ströme, d.h. 35 µA entladen, so ergibt sich eine Lagerdauer von ca. 16 Monaten. Der äquivalente Selbstentladestrom des Li-lonen-Akkumulators am Entladeschluß (0 mAh) beträgt nur noch maximal ca. 10 µA. Der Strom der Sicherheitselektronik ist, da diese dann in den Standby oder Sleep-Modus geschaltet hat, vernachlässigbar. Daraus ergibt sich, daß je 100 mAh Kapazität des verwendeten Primärelements, vorzugsweise einer LiMnO₂-Primärzelle, die Lagerfähigkeit des Li-Ionen-Akkumulators um mehr als 1 Jahr verlängert werden kann. Wegen ihres geringen Volumens sind als Primärelement insbesondere Knopfzellen geeignet.

Die in Anordnungen ohne Pufferbatterie beschränkte Lagerfähigkeit der Li-Ionen-Akkus von ca. 1,5 Jahren, was in der Kette zwischen Herstellung und Ingebrauchnahme oft zu kurz ist, kann damit weit erhöht werden.

Dadurch, daß eine Primärbatterie dann zur Pufferung eines Li-Ionen-Akkumulators in Einsatz gebracht wird, wenn dieser fast erschöpft ist, d.h. wenn seine Selbstentladung gering ist und die Sicherheitselektronik bereits jede äußere Entladung durch Auftrennen zum Schutz gegen Tiefentladung unmöglich gemacht hat, ergibt sich eine wesentliche Erhöhung der Lagerfähigkeit des Gerätes. Da zum Zeitpunkt des Einsatzes der Pufferung die elektronische Schutzschaltung im allgemeinen im Standby-Betrieb mit geringer Stromaufnahme ist, sind sehr kleine Batteriekapazitäten der zusätzlichen Primärzelle schon dazu geeignet, zu verhindern, daß die Li-lonen-Akkumulatorspannung weiter abfällt und der Akkumulator so irreversible Kapazitätsverluste erleidet.

## Patentansprüche

1. Vorrichtung zur Stromversorgung eines elektronischen Gerätes, insbesondere eines tragbaren Telefons, mit einem Li-lonen-Akkumulator als Stromquelle und einer diesem zugeordneten Schutzschaltung, **dadurch gekennzeichnet, daß** dem Li-lonen-Akkumulator (1) ein Primärelement (4) als Pufferbatterie über mindestens eine Koppeldiode (5) parallel geschaltet ist, über welche beim Erreichen einer vorgegebenen unteren Spannung des Li-lonen-Akkumulators, die Selbstentladung des Li-lonen-Akkumulators kompensiert wird.

2. Vorrichtung nach Anspruch 1, **dadurch gekennzeichnet, daß** die Schutzschaltung (2) des Li-lonen-Akkumulators (1) beim Erreichen einer vorgegebenen unteren Spannung des Akkumulators, den Entladepfad abschaltet.

3. Vorrichtung nach den Ansprüchen 1 und 2, **dadurch gekennzeichnet, daß** das Primärelement (4) und die Koppeldioden (5) so ausgelegt sind, daß die Summe aus Zellenspannung des Primärelements und Durchlaßspannung der Dioden der vorgebenen unteren Spannung des Li-lonen-Akkumulators entspricht.

4. Vorrichtung nach den Ansprüchen 1 bis 3, **dadurch gekennzeichnet, daß** das Primärelement eine LiMnO₂-Zelle ist.

5. Vorrichtung nach den Ansprüchen 1 bis 4, **dadurch gekennzeichnet, daß** das Primärelement eine Knopfzelle ist.

## Claims

1. A device for the power supply of an electronic instrument, more particularly a portable telephone, with a Li ion accumulator as power source and a protective circuit assigned to it, **characterized in that** a primary element (4) is connected parallel to the Li ion accumulator (1) as a buffer battery, using at least one coupling diode (5), which compensates for the self discharge of the Li ion accumulator when a given lower potential limit for the Li ion accumulator is reached.

2. A device according to claim 1, **characterized in that** the protective circuit (2) of the Li ion accumulator (1) turns off the discharge path when a given lower potential limit of the accumulator is reached.

3. A device according to the claims 1 and 2, **characterized in that** the primary element (4) and the coupling diodes (5) are designed such that the sum of the cell potential of the primary element and the conducting-state voltage of the diodes corresponds to the preset lower potential of the Li ion accumulator.

4. A device according to the claims 1 to 3, **characterized in that** the primary element is a LiMnO₂ cell.

5. A device according to the claims 1 to 4, **characterized in that** the primary element is a button cell.

## Revendications

1. Dispositif d'alimentation électrique d'un appareil électronique, en particulier d'un téléphone portable, équipé d'un accumulateur Li-ions utilisé comme source de courant et d'un circuit protecteur qui lui est affecté, **caractérisé par le fait qu'**un élément primaire (4) est branché en parallèle, en guise de batterie-tampon, avec l'accumulateur Li-ions (1) via au moins une diode de couplage (5) grâce à laquelle, dès l'atteinte d'une valeur déterminée de tension inférieure de l'accumulateur Li-ions, le déchargement spontané de l'accumulateur Li-ions est compensé.

2. Dispositif selon la revendication 1, **caractérisée par le fait que** le circuit protecteur (2) de l'accumulateur Li-ions (1) coupe le circuit de décharge lorsque la tension limite inférieure définie est atteinte.

3. Dispositif selon les revendications 1 et 2, **caractérisée par le fait que** l'élément primaire (4) et les diodes de couplage (5) sont montés de telle façon que la somme de la tension de la cellule de l'élément primaire et de la tension à l'état passant des diodes correspond à la tension inférieure prescrite de l'accumulateur Li-ions.

4. Dispositif selon les revendications 1 à 3, **caractérisée par le fait que** l'élément primaire (4) est une cellule LiMnO₂.

5. Dispositif selon les revendications 1 à 4, **caractérisée par le fait que** l'élément primaire (4) est une pile ronde.
